# EUROPÄISCHE PATENTSCHRIFT

(11) **EP 3 762 953 B1**
(45) Veröffentlichungstag und Bekanntmachung des Hinweises auf die Patenterteilung: **20.11.2024**
(21) Anmeldenummer: 19701646.2
(22) Anmeldetag: 24.01.2019
(51) Int. Cl.: H01H 9/54, H01H 33/59

(54) **TRENNVORRICHTUNG ZUR GLEICHSTROMUNTERBRECHUNG EINES STROMPFADS, UND BORDNETZ EINES KRAFTFAHRZEUGS**
SEPARATING DEVICE FOR INTERRUPTING A DIRECT CURRENT OF A CURRENT PATH, AND ON-BOARD ELECTRICAL SYSTEM OF A MOTOR VEHICLE
DISPOSITIF DE SÉPARATION POUR L'INTERRUPTION D'UN COURANT CONTINU D'UN TRAJET DE COURANT, ET RÉSEAU DE BORD D'UN VÉHICULE À MOTEUR

(30) Priorität: 09.03.2018 DE 102018203636
(43) Veröffentlichungstag der Anmeldung: 13.01.2021
(73) Patentinhaber: Ellenberger & Poensgen GmbH, 90518 Altdorf (DE)
(72) Erfinder: BÖSCHE, Dirk, 38536 Seershausen (DE); WILKENING, Ernst-Dieter, 38108 Braunschweig (DE)
(74) Vertreter: FDST Patentanwälte
(86) Internationale Anmeldenummer: PCT/EP2019/051718
(87) Internationale Veröffentlichungsnummer: WO 2019/170317

(56) Entgegenhaltungen:
- CH-A5- 588 153
- DE-A1- 10 315 982

## Beschreibung

Die Erfindung betrifft eine Trennvorrichtung zur Gleichstromunterbrechung eines Strompfads, insbesondere für ein Bordnetz eines Kraftfahrzeugs. Die Erfindung betrifft weiterhin ein Bordnetz für ein Kraftfahrzeug mit einer solchen Trennvorrichtung.

Bordnetze dienen der Versorgung von elektrischen Verbrauchern und Geräten mit einer Betriebsspannung des Bordnetzes. Derartige Bordnetze werden in der Regel mittels eines Energiespeichers, beispielsweise in Form eines elektrochemischen Batteriesystems, versorgt. Derartige Batteriesysteme liefern systembedingt einerseits dauerhaft einen Betriebsstrom und eine Betriebsspannung, welche sich in einem Niedrigvoltbereich (NV) zwischen 12V bis 48 V (DC) und in einem Hochvoltbereich (HV) bis etwa 1500 V (DC) und höher bemisst. Hierbei ist beispielsweise zu Installations-, Montage- oder Servicezwecken sowie insbesondere auch zum allgemeinen Personenschutz eine zuverlässige Trennung von elektrischen Komponenten oder Einrichtungen von dem als Gleichstromquelle wirksamen Batteriesystem gewünscht. Eine entsprechende Trennvorrichtung muss hierbei in der Lage sein, eine Unterbrechung unter Last, das bedeutet ohne ein vorheriges Abschalten der Gleichstromquelle, zuverlässig und betriebssicher vorzunehmen.

Zur Lasttrennung ist es möglich, einen mechanischen Schalter (Schaltkontakt, Kontaktsystem) mit dem Vorteil einzusetzen, dass bei einer erfolgten Kontaktöffnung eine galvanische Trennung der elektrischen Einrichtung (Verbraucher) von der Gleichstromquelle (Batteriesystem) hergestellt ist. Werden demgegenüber zur Lasttrennung leistungsfähige Halbleiterschalter eingesetzt, so treten auch im Normalbetrieb unvermeidbare Leistungsverluste an den Halbleiterschaltern auf. Des Weiteren ist es mit derartigen Leistungshalbleitern typischerweise nicht möglich, eine galvanische Trennung und somit einen zuverlässigen Personenschutz sicherzustellen.

Aus der DE 102 25 259 B3 ist ein als Lasttrenner ausgebildeter elektrischer Steckverbinder bekannt, welcher nach Art eines Hybridschalters ein Halbleiterschalter sowie Haupt- und Hilfskontakte aufweist, welche mit einer Gleichstromquelle verbunden sind. Der bei einem Aussteckvorgang voreilende Hauptkontakt ist dem nacheilenden und mit den Halbleiterschaltern in Reihe geschalteten Hilfskontakt parallel geschaltet. Dabei wird der Halbleiterschalter zur Lichtbogenvermeidung bzw. Lichtbogenverlöschung angesteuert, in dem dieser periodisch ein- und ausgeschaltet wird.

Aus der WO 2010/108565 A1 ist eine hybride Trennvorrichtung mit einem mechanischen Kontaktsystem und einem diesen parallel geschalteten Halbleiterschalter bekannt. Der Halbleiterschalter ist mit einer Steuerelektronik gekoppelt, welche keine zusätzliche Energiequelle aufweist. Bei einem geschlossenen mechanischen Kontaktsystem ist die Steuerelektronik bzw. der Halbleiterschalter stromsperrend, dies bedeutet, praktisch strom- und spannungslos. Die Steuerelektronik gewinnt die zu deren Betrieb erforderliche Energie aus der Trennvorrichtung, das bedeutet, aus dem Trennschaltersystem selbst, wobei die Energie des beim Öffnen des mechanischen Kontaktsystems entstehenden Lichtbogens genutzt wird. Hierbei ist die Steuerelektronik ansteuerseitig derart mit dem mechanischen Kontaktsystem verschaltet, das bei sich öffnendem Kontaktsystem die Lichtbogenspannung über dessen Schaltkontakte in Folge des Lichtbogens die Steuerelektronik und somit den Halbleiterschalter stromleitend schaltet.

Aus der DE 103 15 982 A2 ist eine Schaltungsanordnung für ein hybrides Schütz bekannt, welche eine Parallelschaltung aus einem elektromagnetisch betätigbaren Hauptschaltkontakt und einem elektronischen Schalter aufweist, wobei mittels der Parallelschaltung eine Last mit einer Spannungsquelle schaltend verbindbar ist. Die Schaltungsanordnung weist hierbei eine Spannungsbegrenzungsschaltung zum Begrenzen der Spannung beim Ausschalten des elektronischen Schalters und des Hauptschaltkontaktes auf, die zumindest mit dem quellenseitigen Ende der Parallelschaltung elektrisch verbunden ist und die einen Ladungsspeicher aufweist, der beim Überschreiten eines Grenzwertes der Spannung entladen wird. Weiterhin ist eine erste Freilaufschaltung zum Abbau der Induktionsspannung beim Ausschalten des elektronischen Schalters und des Hauptschaltkontaktes vorgesehen, die mit dem lastseitigen Ende der Parallelschaltung elektrisch verbunden ist.

Sobald die Steuerelektronik stromleitend geschaltet ist, beginnt der Lichtbogenstrom von dem mechanischen Kontaktsystem auf den Halbleiterschalter zu kommutieren. Dadurch wird der Lichtbogen zwischen den Schaltkontakten des Kontaktsystems verlöscht.

Der Erfindung liegt die Aufgabe zugrunde, eine besonders geeignete Trennvorrichtung (Hybridschalter oder Elektronik) zur Gleichstromunterbrechung eines Strompfades, insbesondere für ein Bordnetz eines Kraftfahrzeugs, anzugeben. Insbesondere soll hierbei eine Trennvorrichtung mit einer verbesserten Betriebssicherheit, auch beim Schalten von hohen Bordnetzspannungen angegeben werden. Der Erfindung liegt weiterhin die Aufgabe zugrunde, ein besonders geeignetes Bordnetz eines Kraftfahrzeugs mit einer derartigen Trennvorrichtung anzugeben.

Hinsichtlich der Trennvorrichtung wird die Aufgabe mit den Merkmalen des Anspruchs 1 und hinsichtlich des Bordnetzes mit den Merkmalen des Anspruchs 6 erfindungsgemäß gelöst. Vorteilhafte Ausgestaltungen und Weiterbildungen sind Gegenstand der jeweiligen Unteransprüche.

Die erfindungsgemäße Trennvorrichtung ist als Trennschaltersystem zur Gleichstromunterbrechung eines Strompfads, insbesondere für ein Bordnetz eines Kraftfahrzeugs, geeignet und eingerichtet. Die Trennvorrichtung weist hierbei einen Hybridschalter mit einem stromführenden mechanischen Kontaktsystem (Schalter) und mit einem hierzu parallel geschalteten ersten Halbleiterschalter auf. Der parallel geschaltete erste Halbleiterschalter ist hierbei in einem geschlossenen Zustand des mechanischen Kontaktsystems geöffnet, also sperrend oder nicht leitend geschaltet, so dass der elektrische Strom über die Schaltstrecke des mechanischen Kontaktsystems geführt wird. Dadurch sind besonders niedrige Durchlassverluste der Trennvorrichtung im Normalbetrieb gewährleistet.

Die Trennvorrichtung weist weiterhin eine schaltbare Widerstandskaskade mit mindestens einem ohmschen Widerstand auf. Die Widerstandskaskade ist hierbei parallel zu dem Kontaktsystem des Hybridschalters geschaltet. Die Widerstandskaskade wirkt somit als eine Schutzbeschaltung des Hybridschalters. Dadurch ist eine besonders geeignete und betriebssichere Trennvorrichtung realisiert.

Bei einem Öffnen des Kontaktsystems wird ein sich ausbildender Lichtbogen zuverlässig und betriebssicher verlöscht. Durch das Schließen oder leitend Schalten des Halbleiterschalters wird die Schaltstrecke des Kontaktsystems kurzgeschlossen, wodurch der Lichtbogenstrom über den Halbleiterschalter und die Widerstandskaskade kommutiert und dadurch verlöscht wird.

Durch die erfindungsgemäße Trennvorrichtung ist insbesondere ein besonders bauraumsparendes und kompaktes Trennschaltersystem realisiert. Dies überträgt sich in der Folge besonders vorteilhaft auf eine beengte Einbausituation in einem Bordnetz eines Kraftfahrzeugs.

Bei einer Anwendung der Trennvorrichtung in einem Bordnetz ist es beispielsweise denkbar, dass die Widerstandskaskade bzw. der mindestens eine Widerstand zusätzlich als ein Lade- und/oder Entladewiderstand für einen Zwischenkreiskondensator nutzbar ist.

In einer vorteilhaften Ausführung ist die Widerstandskaskade als ein kaskadierender Ausschaltüberspannungsbegrenzer (Überspannungsbegrenzer) ausgebildet. Dadurch ist eine zuverlässige und betriebssichere Verlöschung von Lichtbögen gewährleistet.

Die Widerstandskaskade weist mindestens einen zweiten Halbleiterschalter auf, welcher dem mindestens einen Widerstand in Reihe geschaltet ist. Vorzugsweise weist die Widerstandskaskade hierbei mehrerer solcher Widerstands- und Halbleiterschalterpaarungen auf, welche kaskadierend nacheinander geschaltet sind. Dadurch ist es möglich, einen auftretenden Strom schrittweise oder sukzessive zu Null zu zwingen. Vorzugsweise ist es hierbei vorgesehen, dass der oder jeder zweite Halbleiterschalter im Wesentlichen zeitgleich zu dem ersten Halbleiterschalter leitend geschaltet wird.

Der Hybridschalter, insbesondere dessen mechanisches Kontaktsystem, ist mittels einer Reihenschaltung der Widerstandskaskade mit einem dritten Halbleiterschalter kurzschließbar. Dadurch werden trotz einer fehlenden galvanischen Trennung gefährliche Berührungsspannungen am Kontaktsystem zuverlässig vermieden. Dadurch ist ein besonders effektiver und betriebssicherer Personenschutz (Fingersicherheit) gewährleistet.

In einer zweckmäßigen Ausgestaltung ist der oder jeder Halbleiterschalter ansteuerseitig an einen gemeinsamen Controller geführt. Der Controller ist hierbei insbesondere als eine gemeinsame Steuereinheit für den ersten, den zweiten und den dritten Halbleiterschalter ausgeführt. Dadurch wird sichergestellt, dass die Halbleiterschalter gemeinsam und zuverlässig geschaltet werden. Somit ist eine besonders betriebssichere und schnelle Verlöschung des Lichtbogens gewährleistet.

Der Controller ist allgemein programm- und/oder schaltungstechnisch zur Ansteuerung der Halbleiterschalter im Zuge eines Schließ- oder Öffnungsvorgangs des mechanischen Kontaktsystems geeignet und eingerichtet. Der Controller ist somit konkret dazu eingerichtet, bei einem Schließvorgang, bei welchem die Kontakte des Kontaktsystems geschlossen werden, die Halbleiterschalter derart anzusteuern, dass das Kontaktsystem spannungslos eingeschaltet werden kann. Bei einem Öffnungsvorgang steuert der Controller die Halbleiterschalter derart an, dass ein Lichtbogen zwischen den sich öffnenden Kontakten des Kontaktsystems zuverlässig und zeitnah verlöscht wird, und ein Berührungsschutz, insbesondere im Sinne einer ausreichenden "Fingersicherheit", gewährleistet ist.

In bevorzugter Ausgestaltung ist der Controller zumindest im Kern durch einen Microcontroller mit einem Prozessor und mit einem Datenspeicher gebildet, in dem die Funktionalität zur Durchführung der Ansteuerung in Form einer Betriebssoftware (Firmware) programmtechnisch implementiert ist, sodass die Ansteuerung - gegebenenfalls in Interaktion mit einem Benutzer - bei Ausführung der Betriebssoftware in dem Microcontroller automatisch durchgeführt wird.

Der Controller kann im Rahmen der Erfindung alternativ aber auch durch ein nicht programmierbares elektronisches Bauteil, z.B. einen anwendungsspezifischen Schaltkreis (ASIC), gebildet sein, in dem die Funktionalität zur Ansteuerung des Verfahrens mit schaltungstechnischen Mitteln implementiert ist.

In einer besonders betriebssicheren Ausbildung ist dem Hybridschalter eine Überstromschutzeinrichtung vorgeschaltet. Dadurch wird die Schaltaufgabe der Trennvorrichtung unter Last von den Halbleiterschaltern und im Kurzschlussfall von der Überstromschutzeinrichtung übernommen. Insbesondere ist hierdurch eine sichere galvanische Unterbrechung des Strompfades im Fehlerfall gewährleistet.

In einer vorteilhaften Ausführung ist die Überstromschutzeinrichtung als eine Schnellsicherung, beispielsweise in Form eines stromführenden Dehn- oder Schmelzdrahtes, ausgeführt. Dadurch ist eine galvanische Trennung des Strompfades im Fehlerfall sichergestellt.

Ein zusätzlicher oder weiterer Aspekt der Erfindung sieht die Anwendung der vorstehend beschriebenen Trennvorrichtung in einem Bordnetz eines Kraftfahrzeugs vor. Das Bordnetz weist hierbei einen Gleichstromkreis mit einem Energiespeicher und mindestens einen Strompfad auf. Der Energiespeicher ist beispielsweise als ein elektrochemisches Batteriesystem ausgeführt, welche als Gleichstromquelle an den Strompfad angeschlossen ist. Der Strompfad ist hierbei beispielsweise an einen Zwischenkreis des Bordnetzes geführt. Die Trennvorrichtung ist hierbei in den Strompfad verschaltet. Dadurch ist ein besonders betriebssicheres und zuverlässig abschaltbares Bordnetz realisiert.

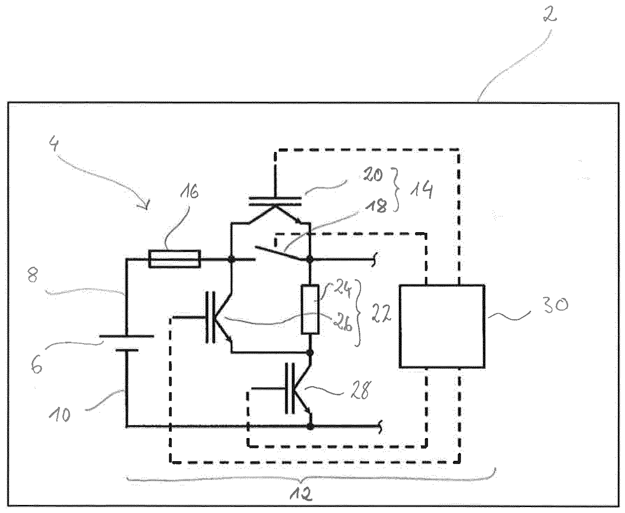

Nachfolgend ist ein Ausführungsbeispiel der Erfindung anhand einer Zeichnung näher erläutert. Darin zeigt die einzige Figur in einer schematischen und vereinfachten Darstellung ein Bordnetz für ein Kraftfahrzeug, mit einer Trennvorrichtung zur Unterbrechung eines Gleichstromkreises.

Die Figur zeigt in schematischer und vereinfachter Darstellung ein Kraftfahrzeug 2. Das Kraftfahrzeug 2 weist ein ausschnittsweise dargestelltes Bordnetz 4 auf. Das Bordnetz 4 ist mit einem elektrochemischen Batteriesystem 6 als Energiespeicher oder Gleichstromquelle ausgeführt. An die Pole des Batteriesystems 6 ist jeweils ein Strompfad 8, 10 angeschlossen. Der an den Pluspol des Batteriesystems 6 geführte Strompfad 8 ist nachfolgend auch als Pluspfad und der an den Minuspol der an das Batteriesystem 6 geführte Strompfad 10 ist nachfolgend entsprechend auch als Minuspfad bezeichnet.

In dem gezeigten Ausführungsbeispiel ist eine Trennvorrichtung 12 zur Gleichstromunterbrechung in dem Pluspfad 8 verschaltet. Die Trennvorrichtung 12 weist einen Hybridschalter 14 und eine diesem vorgeschalteten Überstromschutzeinrichtung 16 auf. Die Überstromschutzeinrichtung 16 ist hierbei beispielsweise als eine Schmelzsicherung ausgeführt.

Der Hybridschalter 14 weist ein stromführendes mechanisches Kontaktsystem 18 in Form eines Schalters auf, dem ein Halbleiterschalter 20 parallel geschaltet ist. Parallel zu dem Halbleiterschalter 20 und zu der Schaltstrecke des Kontaktsystems 18 ist weiterhin eine Widerstandskaskade 22 als kaskadierende Ausschaltüberspannungsbegrenzer der Trennvorrichtung 12 verschaltet.

In dem gezeigten Ausführungsbeispiel weist die Widerstandskaskade 22 einen ohmschen Widerstand 24 und einen hierzu in Reihe geschalteten Halbleiterschalterschalter 26 auf. In Reihe zu der Widerstandskaskade 22 ist ein weiter Halbleiterschalter 28 verschaltet, welcher ausgangsseitig an den Minuspfad 10 geführt ist. Die Halbleiterschalter 20, 26, 28 sind ansteuersteuerseitig an einen gemeinsamen Controller 30 geführt.

Die Halbleiterschalter 20, 26 und 28 sind als Leistungshalbleiter, insbesondere als Transistoren, vorzugsweise als IGBTs (Insulated-Gate Bipolar Transistor) ausgeführt. Die Eingangs- oder Kollektoranschlüsse der Halbleiterschalter 20 und 26 sind hierbei zwischen der Überstromschutzeinrichtung 16 und dem Kontaktsystem 18 verschaltet. Der Ausgangs- oder Emitteranschluss des Halbleiterschalters 26 ist hierbei zwischen den Widerstand 24 und den Eingangs- oder Kollektoranschluss des Halbleiterschalters 28 geschaltet. Der Halbleiterschalter 28 ist ausgangs- oder emitterseitig an den Minuspfad 10 geführt.

Im eingeschalteten oder stromführenden Betrieb der Trennvorrichtung 12 sind die Halbleiterschalter 20, 26 und 28 ausgeschaltet, also sperrend oder elektrisch nicht leitend geschaltet, und das mechanische Kontaktsystem 18 ist geschlossen. Dadurch wird ein Gleichstrom des Batteriesystems 6 lediglich über die mechanischen Kontakte des Kontaktsystems 18 geführt. Dadurch sind besonders geringe Durchlassverluste der Trennvorrichtung 12 gewährleistet.

Im Zuge eines Ausschaltvorgangs, also eines Trennvorgangs der Trennvorrichtung 12, wird das stromdurchflossene Kontaktsystem 18 geöffnet. Bei einem Öffnen des Kontaktsystems 18 bildet sich ein Lichtbogen aufgrund der anliegenden Betriebs- oder Bordnetzspannung des Bordnetzes 4 aus.

Bei einem Öffnen des Kontaktsystems 18 schaltet der Controller 30 den Halbleiterschalter 20 leitend, so dass der auftretende Lichtbogenstrom auf den Halbleiterschalter 20 kommutiert und dadurch verlöscht. Der Controller 30 schaltet im Wesentlichen zeitgleich zum Halbleiterschalter 20 auch den Halbleiterschalter 26 der Widerstandskaskade 22 ein.

Sobald die Schaltstrecke des Kontaktsystems 18 eine ausreichende elektrische Festigkeit aufweist, wird der Halbleiterschalter 20 abgeschaltet, wodurch der Strom durch die Widerstandskaskade 22 schrittweise über den Widerstand 24 zu Null gezwungen wird. Unter einer ausreichenden elektrischen Festigkeit ist hierbei insbesondere ein Verlöschen des Lichtbogens zu verstehen. Um trotz einer fehlenden galvanischen Trennung personengefährliche Berührungsspannungen am Kontaktsystem 18 zuverlässig zu vermeiden, wird der Halbleiterschalter 28 von dem Controller 30 leitend geschaltet. Dadurch wird das Kontaktsystem 18 durch die Reihenschaltung aus dem Widerstand 24 und dem Halbleiterschalter 28 kurzgeschlossen. Die Reihenschaltung bildet somit eine niederohmige Verbindung zwischen dem Pluspfad 8 und dem Minuspfad 10. Bei einem Fehlerfall würde somit die Überstromschutzeinrichtung 16 auslösen, und dadurch den Pluspfad 8 zuverlässig und betriebssicher galvanisch unterbrechen.

Bei einem Einschaltvorgang der Trennvorrichtung 12 wird zunächst der Halbleiterschalter 28 von dem Controller 30 ausgeschaltet, also sperrend angesteuert. Im Anschluss wird der Halbleiterschalter 26 eingeschaltet und somit ein an dem Bordnetz 4 angeschlossener Last- oder Zwischenkreis über den Widerstand 24 der Widerstandskaskade 22 vorgeladen. Ist der dabei fließende Ladestrom auf einen gewissen Wert abgeklungen, wird der Halbleiterschalter 20 von dem Controller 30 eingeschaltet. Zur Überwachung des Ladestroms weist der Controller 30 beispielsweise einen nicht näher dargestellten Strommesser im Pluspfad 8 auf.

Durch den leitend geschalteten Halbleiterschalter 20 wird das mechanische Kontaktsystem 18 überbrückt, wodurch dieser spannungslos zugeschaltet werden kann. Dadurch ist ein Verschließen der mechanischen Kontakte des Kontaktsystems 18 zuverlässig und einfach vermieden. Aufgrund der geringeren Durchlassspannung der mechanischen Schaltstrecke kommutiert der Strom somit vollständig von dem Halbleiterschalter 20 auf das Kontaktsystem 18. Abschließend werden die Halbleiterschalter 20 und 26 stromlos von dem Controller 30 ausgeschaltet.

Die Halbleiterschalter 20, 26 und 28 werden somit im Betrieb der Trennvorrichtung 12 lediglich kurzzeitigen und niedrigen Belastungen ausgesetzt. Dadurch werden Wärmeverluste der Halbleiterschalter 20, 26 und 28 reduziert, wodurch auf einen Kühlkörper der Trennvorrichtung 12 im Wesentlichen verzichtet werden kann.

Die Schaltaufgabe der Trennvorrichtung 12 wird unter Last von den Halbleiterschaltern 22, 26 und 28 und in einem Kurzschluss oder Fehlerfall von der Überstromschutzeinrichtung 16 übernommen. Dadurch ist es möglich, die Schaltstelle des Kontaktsystems 18 lediglich hinsichtlich der zu führenden Ströme des Bordnetzes zu dimensionieren.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

Insbesondere ist es beispielsweise denkbar, dass die Widerstandskaskade 22 mehrere kaskadierend geschaltete Paarungen von Widerständen 24 und Halbleiterschaltern 26 aufweist, sodass die Widerstände 24 mittels der Halbleiterschalter 26 schrittweise oder sukzessive hinzu- oder weggeschaltet werden können. Dadurch ist eine besonders effektive und betriebssichere Abführung von Wärmeverlusten im Zuge der Stromkommutierung ermöglicht.

### Bezugszeichenliste

- 2: Kraftfahrzeug
- 4: Bordnetz
- 6: Batteriesystem/Energiespeicher
- 8: Strompfad/Pluspfad
- 10: Strompfad/Minuspfad
- 12: Trennvorrichtung
- 14: Hybridschalter
- 16: Überstromschutzeinrichtung
- 18: Kontaktsystem
- 20: Halbleiterschalter
- 22: Widerstandskaskade
- 24: Widerstand
- 26: Halbleiterschalter
- 28: Halbleiterschalter
- 30: Controller

## Patentansprüche

1. Trennvorrichtung (12) zur Gleichstromunterbrechung eines Strompfads (8), insbesondere für ein Bordnetz (4) eines Kraftfahrzeugs (2), aufweisend
- einen Hybridschalter (14) mit einem stromführenden mechanischen Kontaktsystem (18) und mit einem hierzu parallel geschalteten ersten Halbleiterschalter (20), welcher in einem ersten Strompfad (8) verschaltet ist, und
- eine schaltbare Widerstandskaskade (22) mit mindestens einem ohmschen Widerstand (24), welche parallel zu dem Kontaktsystem (18) des Hybridschalters (14) geschaltet ist, **dadurch gekennzeichnet,**
- **dass** die Widerstandskaskade (22) mindestens einen zweiten Halbleiterschalter (26) aufweist, welcher dem mindestens einen Widerstand (24) in Reihe geschaltet ist,
- wobei in Reihe zu der Widerstandskaskade (22) ein dritter Halbleiterschalter (28) verschaltet ist, welcher ausgangsseitig an einen zweiten Strompfad (10) geführt ist, und
- wobei das Kontaktsystem (18) des Hybridschalters (14) mittels der Reihenschaltung der Widerstandskaskade (22) mit dem dritter Halbleiterschalter (28) kurzschließbar ist.

2. Trennvorrichtung (12) nach Anspruch 1,
**dadurch gekennzeichnet,**
**dass** die Widerstandskaskade (22) als ein kaskadierender Ausschaltüberspannungsbegrenzer ausgebildet ist.

3. Trennvorrichtung (12) nach Anspruch 1 oder 2,
**dadurch gekennzeichnet,**
**dass** der oder jeder Halbleiterschalter (20, 26, 28) ansteuerseitig an einen gemeinsamen Controller (30) geführt ist.

4. Trennvorrichtung (12) nach einem der Ansprüche 1 bis 3,
**dadurch gekennzeichnet,**
**dass** dem Hybridschalter (14) eine Überstromschutzeinrichtung (16) vorgeschaltet ist.

5. Trennvorrichtung (12) nach Anspruch 4,
**dadurch gekennzeichnet,**
**dass** die Überstromschutzeinrichtung (16) als eine Schmelzsicherung ausgeführt ist.

6. Bordnetz (4) für ein Kraftfahrzeug (2), aufweisend einen Gleichstromkreis mit einem Energiespeicher (6) und mit zwei Strompfaden (8, 10), wobei einer der Strompfade (8) eine Trennvorrichtung (12) nach einem der Ansprüche 1 bis 5 aufweist.

## Claims

1. Disconnecting apparatus (12) for interrupting a DC current of a current path (8), in particular for an on-board electrical system (4) of a motor vehicle (2), having
- a hybrid switch (14) with a current-carrying mechanical contact system (18) and with a first semiconductor switch (20) connected in parallel with the latter, which hybrid switch is connected in a first current path (8), and
- a switchable resistor cascade (22) with at least one ohmic resistor (24), which switchable resistor cascade is connected in parallel with the contact system (18) of the hybrid switch (14), **characterized**
- **in that** the resistor cascade (22) has at least one second semiconductor switch (26) which is connected in series with the at least one resistor (24),
- wherein a third semiconductor switch (28) is connected in series with the resistor cascade (22) and the output side of which is routed to a second current path (10), and
- wherein the contact system (18) of the hybrid switch (14) is able to be short-circuited by means of the series connection comprising the resistor cascade (22) and the third semiconductor switch (28).

2. Disconnecting apparatus (12) according to Claim 1, **characterized**
**in that** the resistor cascade (22) is in the form of a cascading switch-off overvoltage limiter.

3. Disconnecting apparatus (12) according to Claim 1 or 2,
**characterized**
**in that** the control side of the or each semiconductor switch (20, 26, 28) is routed to a common controller (30) .

4. Disconnecting apparatus (12) according to one of Claims 1 to 3,
**characterized**
**in that** an overcurrent protection device (16) is connected upstream of the hybrid switch (14).

5. Disconnecting apparatus (12) according to Claim 4, **characterized**
**in that** the overcurrent protection device (16) is implemented as a fuse.

6. On-board electrical system (4) for a motor vehicle (2), having a DC circuit with an energy store (6) and with two current paths (8, 10), wherein one of the current paths (8) has a disconnecting apparatus (12) according to one of Claims 1 to 5.

## Revendications

1. Dispositif de séparation (12) destiné à l'interruption en courant continu d'un chemin de courant (8), en particulier destiné à un réseau de bord (4) d'un véhicule automobile (2), ledit dispositif de séparation comportant
- un commutateur hybride (14) pourvu d'un système de contact mécanique (18) conducteur de courant et d'un premier commutateur à semi-conducteur (20) monté en parallèle qui est monté dans un premier chemin de courant (8), et
- une cascade de résistances commutable (22) comprenant au moins une résistance ohmique (24) qui est montée en parallèle avec le système de contacts (18) du commutateur hybride (14), **caractérisé en ce que**
- la cascade de résistances (22) comporte au moins un deuxième commutateur à semi-conducteur (26) qui est monté en série avec l'au moins une résistance (24),
- un troisième commutateur à semi-conducteur (28), qui est relié du côté sortie à un deuxième chemin de courant (10), étant monté en série avec la cascade de résistances (22), et
- le système de contacts (18) du commutateur hybride (14) pouvant être court-circuité avec le troisième commutateur à semi-conducteur (28) au moyen du montage en série de la cascade de résistances (22).

2. Dispositif de séparation (12) selon la revendication 1, **caractérisé en ce que** la cascade de résistances (22) est conçue comme un limiteur de surtension à déconnexion en cascade.

3. Dispositif de séparation (12) selon la revendication 1 ou 2, **caractérisé en ce que** le ou chaque commutateur à semi-conducteur (20, 26, 28) est relié côté commande à un contrôleur commun (30).

4. Dispositif de séparation (12) selon l'une des revendications 1 à 3, **caractérisé en ce qu'**un module de protection contre les courants de surcharge (16) est monté en amont du commutateur hybride (14).

5. Dispositif de séparation (12) selon la revendication 4, **caractérisé en ce que** le module de protection contre les courants de surcharge (16) est réalisé sous la forme d'un fusible.

6. Réseau de bord (4) destiné à un véhicule automobile (2), ledit réseau de bord comportant un circuit à courant continu pourvu d'un accumulateur d'énergie (6) et de deux chemins de courant (8, 10), l'un des chemins de courant (8) comportant un dispositif de séparation (12) selon l'une des revendications 1 à 5.
